# EUROPEAN PATENT APPLICATION

(11) **EP 4 636 852 A1**
(43) Date of publication of application: **22.10.2025**
(21) Application number: 23903898.7
(22) Date of filing: 08.12.2023
(51) Int. Cl.: H01M 4/36, H01M 4/38, H01M 4/587, H01M 4/134, H01M 4/133, H01M 4/04, H01M 10/0525, H01M 4/02

(54) **HIGH-CAPACITY ANODE MATERIAL FOR LITHIUM ION BATTERY**

(30) Priority: 16.12.2022 KR 20220177453
(71) Applicant: POSCO Holdings Inc., Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: YOU, Seung-Jae, Pohang-si, Gyeongsangbuk-do 37575 (KR); PARK, Sun-Jong, Pohang-si, Gyeongsangbuk-do 37655 (KR); JO, Hyun-Chul, Pohang-si, Gyeongsangbuk-do 37834 (KR); WOO, Jung-Gyu, Pohang-si, Gyeongsangbuk-do 37671 (KR)
(74) Representative: Pfenning, Meinig & Partner mbB
(86) International application number: PCT/KR2023/020187
(87) International publication number: WO 2024/128695

(57) **Abstract**

One aspect of the present invention provides a high-capacity anode material for a lithium ion battery, and a manufacturing method therefor, the high-capacity anode material having an improved cycle lifespan due to the controlled amount of stabilized zirconia in a Si-carbon complex anode material, thereby preventing decrease in capacity per weight and providing a carbon matrix capable of capturing Si nanoparticles and crystalline carbon.

## Description

### Technical Field

The present disclosure relates to a high-capacity anode material for lithium-ion batteries and a method of manufacturing the same.

### Background Art

Lithium-ion batteries are currently the most widely used secondary battery systems in portable electronic communication devices, electric vehicles, and even energy storage devices. Such lithium-ion batteries have advantages, such as high energy density and operating voltages and relatively low self-discharge rate compared to commercial aqueous secondary batteries (Ni-Cd, Ni-MH, etc.), and are thus the focus of attention. However, considering more efficient use time in portable devices and improved energy characteristics in electric vehicles, improvements in electrochemical characteristics still remain as technical issues to be resolved. As a result, research and development is currently being conducted on four major raw materials, including cathodes, anodes, electrolytes, and separators.

Among these raw materials for anodes, graphite-based materials exhibiting excellent capacity retention characteristics and efficiency have been commercialized. However, a relatively low theoretical capacity value (LiC₆: 372 mAh/g) and low discharge capacity ratio of graphite-based materials are somewhat insufficient to meet the high-energy and high-power density characteristics of batteries required in the market.

Therefore, many researchers have been interested in Group IV elements (Si, Ge, Sn) in the periodic table, and thereamong, Si in particular, has come to prominence as a very attractive material due to the very high theoretical capacity (Li₁₅Si₄: 3600 mAh/g) and low operating voltage (~0.1 V vs. Li/Li+) thereof. However, Si undergoes large volume expansion and contraction due to a reaction with lithium during charging and discharging, which may cause a fine powder of silicon active material and poor electrical contact between silicon active material powder and a current collector. Due to this phenomenon, the capacity of lithium-ion batteries may rapidly decrease as charging and discharging cycles proceed.

### Summary of Invention

### Technical Problem

An aspect of the present disclosure is to provide a high-capacity anode material for a lithium-ion battery, that mitigates the volume expansion of silicon due to repeated charging and discharging, has a long cycle life, and has excellent charging and discharging capacities, and a method of manufacturing the same.

### Solution to Problem

According to an aspect of the present disclosure, an anode material for a lithium ion battery includes: crystalline carbon; a carbon matrix; and zirconia in an amount less than 2.5 wt%.

The crystalline carbon may include at least one of artificial graphite, flake graphite, amorphous graphite, graphene, coal-based pitch, and petroleum-based pitch.

The carbon matrix may include carbon derived from at least one of petroleum-based pitch and coal-based pitch having a softening point of 250°C or less, coal tar, PAA, and PVA.

The petroleum-based pitch and the coal-based pitch may have a high β-resin value of 25% or more and a fixed carbon ratio of 70% or more.

The zirconia may include zirconia derived from a process of nanosizing Si particles.

The anode material may include 40 to 65 wt% of the Si nanoparticles and less than 50 wt% of the crystalline carbon.

A median particle size of the anode material may be 15 µm or less.

According to another aspect of the present disclosure, a method of manufacturing an anode material for a lithium ion battery includes: pulverizing a Si raw material through a mechanical milling process to obtain Si nanoparticles; mixing crystalline carbon and a carbon matrix precursor with the Si nanoparticles to obtain a mixture; press-molding the mixture to manufacture a block; heating the block at a temperature less than 1000°C and in an inert atmosphere; and pulverizing the block.

The mechanical milling process may use a polycrystalline silicon raw material (poly-Si) with a half-width of 0.2 degrees or more as a starting material.

The mechanical milling may be performed using stabilized zirconia balls having a median particle size (D50) of less than twice the D99 particle size of the Si raw material.

A D1 particle size of the stabilized zirconia may be maintained at 52 µm or more during the mechanical milling process.

A median particle size of the Si nanoparticles may be less than 150 nm.

A median particle size of the crystalline carbon may be 5 µm or more and 10 µm or less.

The zirconia may include zirconia derived from a mechanical milling process.

The manufactured anode material may include 40 to 65 wt% of Si nanoparticles and less than 50 wt% of crystalline carbon.

### Advantageous Effects of Invention

According to an aspect of the present disclosure, by controlling the content of stabilized zirconia in the Si-carbon composite anode material as described above, a decrease in capacity per weight is prevented and a carbon matrix capable of capturing Si nanoparticles and crystalline carbon may be provided, thereby providing a high-capacity anode material for a lithium-ion battery with improved cycle life.

According to another aspect of the present disclosure, a method of manufacturing an anode material for a lithium ion battery which is easy to synthesize the Si-carbon composite anode material described above may be provided.

### Best Mode for Invention

Hereinafter, embodiments of the present disclosure will be described. However, the embodiments of the present disclosure may be modified in various other forms, and the scope of the present disclosure is not limited to the embodiments described below. In addition, the embodiments of the present disclosure are provided to more completely describe the present disclosure to those skilled in the art.

In this specification, the term "include" is used to indicate that other components may not be excluded but be included unless specifically stated otherwise.

In addition, in the specification of the present disclosure, the % unit indicates weight % unless specifically stated otherwise.

In order to prevent the deterioration of cycle characteristics due to volume expansion and contraction of silicon particles, it is necessary to secure Si nanoparticles from polycrystalline silicon raw material (poly Si) through a Si nanosizing process.

Such a Si nanosizing process is performed through a medium having higher hardness than Si, and stabilized zirconia having high hardness and small volume change at high temperatures is generally used. In the corresponding nanosizing process, stabilized zirconia is brought into colliding with Si particles so as to be pulverized into nano-sized particles. The Si nanoparticles that are finely pulverized in this manner have to be perfectly captured by a carbon matrix so that the Si-carbon composite anode material including the same may secure long-life and low-expansion characteristics.

However, according to the research results of the inventors of the present disclosure, fine particles of zirconia are inevitably discharged through a nano-milling device due to collisions between stabilized zirconia during the Si nanosizing process, and the fine particles of zirconia discharged in this manner may be included in the carbon matrix. In this case, the capacity per weight of the anode material may decrease due to a high bulk density value (6 g/cc) of zirconia. In addition, as the number of particles in the carbon matrix increases, it may be difficult for the Si nanoparticles to be captured in the carbon matrix, which may increase a specific surface area of the anode material, and thus significantly reduce the cycle life of the anode material.

Therefore, the inventors of the present disclosure realized the need to actively limit the content of zirconia in the anode material and derived the present disclosure. From this perspective, the anode material according to an embodiment of the present disclosure may include Si nanoparticles; crystalline carbon; a carbon matrix; and less than 2.5 wt% of zirconia. Hereinafter, each component will be described in detail.

In an embodiment of the present disclosure, a silicon-based anode material including Si nanoparticles is targeted. The anode material may include Si nanoparticles to implement a high-capacity battery, compared to a carbon-based anode material. In addition, in an embodiment of the present disclosure, the Si nanoparticles may be fine particles having a median particle size (D50) of less than 150 nm. More specifically, the anode material according to an embodiment of the present disclosure may have an upper limit of the silicon particle size to 150 nm so that reversible charging-discharging may be performed without pulverizing the silicon active material powder. The median particle size refers to a particle size at the center of a particle size distribution obtained when measured by a particle size analyzer from Beckmann Coulter.

Crystalline carbon included in the anode material may play a role in improving the conductivity of the anode material and enhancing the reversibility of lithium ions, thereby increasing cycle life. At this time, as an example, the crystalline carbon may include at least one of graphite having orientation, graphene, and coal-based or petroleum-based pitch including beta resin. More specifically, the graphite may include artificial graphite having excellent reversibility, flake graphite, amorphous graphite, etc.

The carbon matrix may play a role in improving the electrochemical properties of synthetic powder by filling micropores inside a Si-carbon precursor during press-molding after spray drying. Although not necessarily limited thereto, the carbon matrix included in the anode material may include carbon derived from at least one of petroleum-based and coal-based pitch having a softening point of 250°C or less, coal tar, PAA, and PVA. At this time, carbon derived from at least one of the petroleum-based and coal-based pitches having a softening point of 250°C or less, coal tar, PAA and PVA may refer to carbon formed by carbonization of the aforementioned materials. The pitch may have a high β-resin value of 25% or higher and a fixed carbon ratio of 70% or higher. This is to prevent expansion of Si nanoparticles and secure a conductive path.

The aforementioned anode material may include less than 2.5 wt% of zirconia. As described above, according to the research results of the inventors of the present disclosure, when the Si-carbon composite anode material includes 2.5% or more of zirconia, the number per weight of Si nanoparticles in the anode material may decrease due to the high bulk density of zirconia, which may cause a problem of decreased battery capacity. Therefore, in the present disclosure, the content of the zirconia may be limited to less than 2.5%. A more preferable upper limit is 2.0%, and an even more preferable upper limit is 1.0%. A lower limit of the zirconia content does not need to be specifically limited. Therefore, the zirconia content may also be 0%. However, considering the degree to which zirconia is inevitably included due to the process, the lower limit of the zirconia content may be set to 0.25% in an example of the present disclosure. In this case, zirconia included in the anode material may be derived from a process of nanosizing Si particles.

According to an embodiment, the anode material of the present disclosure may include 40 to 65 wt% of Si nanoparticles and less than 50 wt% of crystalline carbon.

If the Si nanoparticles are included in an amount greater than 65%, the Si nanoparticles and crystalline carbon cannot be completely captured in the carbon matrix, and thus there is a problem that the Si nanoparticles may expand during charging and discharging. In this case, the structure of the anode material may collapse, and the cycle life characteristics of an electrode may be deteriorated. A more preferable upper limit is 60%, and an even more preferable upper limit is 58%. Meanwhile, in order to provide a high-capacity Si-carbon composite anode material, it is preferable that the Si nanoparticles include 40% or more of Si nanoparticles. A more preferable lower limit is 45%, and an even more preferable lower limit is 50%.

In addition, the crystalline carbon added to impart conductivity and reversibility may be added in a composition of less than 50 mass%, because the carbon matrix may effectively capture the crystalline carbon in the corresponding range. A more preferable upper limit is 20%, and an even more preferable upper limit is 18%.

The median particle size of the anode material according to the present disclosure may be 15 µm or less. If the median particle size of the anode material exceeds 15 µm, the Si content per particle may increase and the cycle life characteristics may deteriorate due to the expansion problem of the Si particles.

The lithium ion negative electrode including the Si-carbon composite anode material according to the present disclosure may exhibit high capacity characteristics and excellent cycle life characteristics. Preferably, an ion electrode for lithium ions including the anode material according to the present disclosure may have an initial discharge capacity of 550 mAh/g or more and an initial efficiency of 87% or more.

Hereinafter, a method of manufacturing an anode material according to the present disclosure will be described.

The method of manufacturing the anode material according to the present disclosure may include pulverizing a Si raw material through a mechanical milling process to obtain Si nanoparticles; mixing the Si nanoparticles with crystalline carbon and a carbon matrix precursor to obtain a mixture; press-molding the mixture to manufacture a block; heat-treating the block; and pulverizing the block.

In addition, the anode material manufactured by the aforementioned manufacturing method may include less than 2.5% of zirconia.

At this time, zirconia included in the manufactured anode material may be zirconia derived from a mechanical milling process.

The mechanical milling process may use a polycrystalline silicon raw material (poly-Si) having a half-width of 0.2 or more as a starting material. When the half-width of the polycrystalline silicon raw material is 0.2 or more, even if the starting material has the same slurry viscosity and undergoes a similar wet pulverizing process, the viscosity of the slurry including Si nanoparticles may increase. This means that, as the half-width is higher, the nanosizing efficiency of silicon particles due to destruction through grain boundaries is higher. Therefore, in the case of using Si particles having a half-width of 0.2 or more, the time required for the process of nanosizing Si particles may be reduced, which may reduce the amount of zirconia ball fine particles discharged in the process and also save manufacturing costs. Meanwhile, when the half-width is less than 0.2, the time required for the process of nanosizing Si particles may increase, and accordingly, the amount of fine particles of the stabilized zirconia balls may also increase.

The mechanical milling may be performed using stabilized zirconia balls. In this case, since the zirconia balls may be used in process in various sizes, they are not limited to the technical content. However, as an example of implementation, the median particle size of the zirconia beads may be less than twice the D99 of an introduced raw material. This is because, if the D99 of the introduced raw material is excessively large or the stabilized zirconia balls are excessively small, the efficiency of the Si nanosizing process may be excessively reduced, which may increase the time required for nanosizing, and thus, side effects, such as excessive generation of stabilized zirconia fine particles or oxidation of the Si particles may occur.

In addition, the stabilized zirconia particle size during the mechanical milling may be maintained at 52 µm or more based on D1. The D1 represents a particle size corresponding to the lower 1% of the particle size distribution obtained when measured by a particle size analyzer from Beckmann Coulter. If the D1 is less than 52 µm, fine particles of the stabilized zirconia may pass through a screen of the nano-milling device and flow out from the corresponding device in large quantities, thereby causing excessive inclusion of the stabilized zirconia in the carbon matrix. To prevent this, the stabilized zirconia particle size corresponding to D1 may be set to 52 µm or more.

In addition, the mechanical milling process may use an organic solvent, such as ethanol or IPA to prevent oxidation of Si.

In addition, the median particle size of the Si nanoparticles prepared by the Si nanosizing process described above may be less than 150 nm. This is because, as mentioned above, a critical size (Dc) for reversible charging-discharging without pulverizing silicon active material powder is approximately 150 nm.

After the pulverizing, crystalline carbon and carbon matrix precursors may be mixed with Si nanoparticles.

As mentioned above, crystalline carbon used in the above manufacturing method may include at least one of graphite, graphene, and coal-based or petroleum-based pitch including beta resin, and preferably may include artificial graphite, flake graphite, amorphous graphite, etc. with excellent reversibility.

As an example, graphite having a median particle size of 5 to 10 µm may be used as crystalline carbon. If the median particle size of the graphite is less than 5 µm, the number of particles included in the carbon matrix may relatively increase, so the content of the carbon matrix precursors to surround the graphite has to increase, and thus, the Si content may inevitably decrease relatively, making it difficult to implement the design capacity. Meanwhile, if the median particle size of the graphite exceeds 10 µm, graphite cannot be located inside the Si-carbon precursor, which may deteriorate the performance of a final product.

In addition, as described above, the carbon matrix precursor may be at least one of petroleum-based and coal-based pitches having a softening point of 250°C or less, coal tar, PAA, and PVA, and the pitch used in the manufacturing method may have a high β-resin value of 25% or more and a fixed carbon ratio of 70% or more as described above. This carbon matrix precursor may be added to electrically and physically connect the Si nanoparticles and the crystalline carbon, and cohesion force between the three raw materials may be improved by forming an amorphous carbon layer through a subsequent press-molding process and a heat treatment process.

The mixing of the Si nanoparticles, the crystalline carbon, and the carbon matrix precursor may be performed through a milling process using a contact medium with powder, such as mechanofusion and a ball mill. In this manner, since the milling process is performed using a contact medium with powder, independent flow of the Si nanoparticles may be minimized when mixed with a solvent.

After the aforementioned mixing, the mixture may be press-molded to manufacture a block. Through the press-molding, pores existing inside the Si nanoparticle-crystalline carbon precursor may be minimized, and a high-density anode material may be manufactured by increasing cohesion force of the constituent particles. The pressure and pressurization time in the press-molding operation are not particularly limited within a range that may achieve the aforementioned purpose. In a preferred embodiment, the press-molding may be performed under a pressure of less than 1 ton/cm².

Thereafter, the present disclosure may include heating the press-molded block at a temperature lower than 1000°C and in an inert atmosphere. When heating at 1000°C or higher, a final product inert to lithium ions may be manufactured, so the heat-treatment temperature is set to less than 1000°C. In addition, the heat-treatment may be performed under an inert atmosphere to prevent oxidation of the Si nanoparticles.

After the aforementioned heat treatment, pulverizing the heat-treated block may be performed. The pulverization may be performed using a JET mill, a pin mill, etc., and through this, a final product having a median particle size of 15 µm or less may be obtained.

Meanwhile, in an embodiment of the present disclosure, coating the surface of the pulverized particles after the pulverization may be further included. Through the additional coating, the surface of partially exposed Si may be protected to suppress side reactions with an electrolyte. Accordingly, expansion of the Si nanoparticles may be prevented, and excellent electrical performance of the anode material may be secured.

In addition, the surface coating may be performed using petroleum-based pitch or coal tar having a softening point of less than 250°C, PAA, PVA, etc..

Meanwhile, the anode material manufactured as described above may include 40 to 65 wt% of Si nanoparticles and less than 50 wt% of crystalline carbon.

### Mode for Invention

### (Example)

### (1) Manufacturing slurry including Si nanoparticles

In order to prepare Si nanoparticles, ball milling, which is one of wet nanosizing processes, was performed on a polycrystalline silicon raw material having the particle size and crystal grain size shown in Table 1. In this experiment, the milling process was first started using a novel zirconia ball, and samples were collected according to the elapsed time of the milling process. At this time, the measured values (D1, D50, D90, and span value ((D90-D10)/D50)) of the stabilized zirconia particle size are shown in Table 2 according to the elapsed time of the milling process. The polycrystalline silicon raw material has a half- width of 0.2 degrees or more, and the median particle size of the Si nanoparticles manufactured by the process is 100 nm. In addition, the wet nanosizing process was performed using 99.9% pure anhydrous ethanol as a solvent and a solid solution ratio of 8 to 15%. In the above process, a ball per ratio (BPR) of the raw material to the stabilized zirconia ball was 5:1, and a rotation speed of a rotor inside a grinder was maintained at 2500 rpm.

### (2) Manufacturing of anode material

53% of slurry manufactured according to the corresponding process was mixed with 18% of the graphite particles using a high-speed mixer and spray-dried to synthesize a nano Si-graphite precursor with a median particle size of about 8 µm. The above % is based on a final Si-graphite composite anode material. The median particle size of graphite was 5 to 10 µm. The precursor and pitch powder were then mixed. The mixing was performed through a mechanofusion process. The mixed nano Si-graphite precursor and pitch powder were placed in a mold having a specific size, and uniaxial press-molding was performed at a pressure of about 50 tons. A block obtained through the above press-molding was heat-treated at less than 1000°C in an inert atmosphere, and pulverized to a median particle size less than 15um using a JET mill. Thereafter, 5 to 10% of coal tar was added relative to the added Si nanoparticles, stirred for about 30 minutes using a twisted blade mixer, and heat-treated at less than 1000°C in an inert atmosphere, and a final Si-carbon composite anode material was obtained through a #635mesh (20um) sieve.

The content of stabilized zirconia in the obtained final Si-carbon composite anode material was measured and shown in Table 2.

### (3) Electrochemical evaluation

For the analysis of electrochemical characteristics, the synthesized Si-carbon composite anode active material was mixed with 79% of commercial natural graphite to manufacture a coin half-cell having an anode capacity of 630mAh/g. The composition of an anode electrode was active material:conductive material:CMC:SBR=96.1:1:1.7:1.2, a thickness of the electrode was fixed at 60µm to maintain the same volume ratio, and a rolling density was maintained at 1.6g/cc. The effective area of the electrode was measured using a diameter of 14mm. The electrolyte for the life test was EC:EMC = 3:7(1.0M LiPF₆)+VC1.5wt%. The current during charging-discharging was measured at 0.1C in the initial cycle. In addition, the current of 0.5C was applied during charging-discharging based on the first 1C capacity, and the life of 50 cycles was measured. At this time, the charge cut-off current was set to 0.005C.

Table 3 illustrates the electrochemical characteristics (initial discharge capacity and initial efficiency) of the anode electrodes manufactured in this manner along with the zirconia content included within the Si-carbon composite anode material.

**[Table 1]**

| | | |
|---|---|---|
| Particle size (µm) | D1 | 0.47 |
| | D10 | 1.07 |
| | D50 | 3.28 |
| | D90 | 6.11 |
| | D99 | 8.04 |
| Grain size (nm) | | 31.4 |

**[Table 2]**

| classificatio n | Elapsed time of milling process (min.) | Zirconia content inside Si-carbon anode material (%) | Particle size of stabilized zirconia (µm) | | | |
|---|---|---|---|---|---|---|
| | | | D1 | D50 | D90 | Span |
| Inventive Example 1 | 960 | 0.24 | 67 | 101 | 144.2 | 0.66 |
| Inventive Example 2 | 17,280 | 1.16 | 64 | 100 | 143.8 | 0.67 |
| Inventive Example 3 | 61,440 | 2.21 | 59 | 99 | 143.0 | 0.67 |
| Comparative Example 1 | 150,720 | 3.18 | 50 | 98 | 140.2 | 0.68 |
| Comparative Example 2 | 225, 600 | 4.09 | 51 | 95 | 135.8 | 0.69 |
| Comparative Example 3 | 339, 840 | 5.11 | 50 | 94 | 134.0 | 0.69 |

**[Table 3]**

| classif ication | Zirconi a content inside Si-carbon anode materia l (%) | Thickne ss of electro de (µm) | Area of electro de (cm²) | Weight of active materia l (g) | Initial dischar ge capacit y (mAh/g) | Initial efficie ncy (%) |
|---|---|---|---|---|---|---|
| Inventi ve Example 1 | 0.24 | 60 | 1.5386 | 0.00923 | 628.4 | 89.4 |
| Inventi ve Example 2 | 1.16 | | | | 617.8 | 89.1 |
| Inventi ve Example 3 | 2.21 | | | | 607.5 | 88.4 |
| Compara tive Example 1 | 3.18 | | | | 544.8 | 86.1 |
| Compara tive Example 2 | 4.09 | | | | 532.4 | 85.7 |
| Compara tive Example 3 | 5.11 | | | | 516.9 | 85.4 |

The particle size and grain size of the polycrystalline silicon raw material in Table 1 above were measured using XRD, and the zirconia content inside the Si-carbon composite anode material in Tables 2 and 3 above was measured using spectro ARCO's icp-aes.

Through the above experiment, the correlation between the content of stabilized zirconia incorporated into the anode material during the process of nanosizing Si particles, the raw material for the Si-carbon composite anode material, and the performance of the Si-carbon composite anode material was able to be identified.

As shown in Table 2, it can be seen that, as the Si nanosizing process progresses, the content of zirconia inside the Si-carbon anode material increased, while the particle size of the stabilized zirconia decreased. This is because as the Si nanosizing process time increased, fine particles of zirconia were generated due to collisions between stabilized zirconia balls and were included in the carbon matrix of the anode material.

In addition, it can be seen that, as the milling process time increased from 61,440 minutes to 150,720 minutes and the zirconia content in the anode material exceeded 2.5 wt%, the particle size of the zirconia ball corresponding to D1 rapidly decreased. As a result, it can be seen that, when the particle size of the zirconia ball corresponding to D1 was smaller than 52 µm, it was more difficult to prevent the zirconia fine particles from leaking out of the nano milling device during the Si nanosizing process, and thus a relatively large amount of zirconia was included in the carbon matrix. Even though the milling process was performed for a longer time, there was no significant difference in the particle sizes of zirconia corresponding to D1 in Comparative Examples 1 to 3, which is thought to be because a large amount of fine particles smaller than 50 µm, which is a screen size of the nano milling device, escaped out of the screen.

In Comparative Examples 1 to 3, as the Si nanosizing process progressed, the fine particles of stabilized zirconia were excessively introduced to the Si-carbon anode material, and the zirconia content inside the anode material exceeded 2.5%. Accordingly, the initial discharge capacity and initial efficiency of Comparative Examples 1 to 3 decreased significantly. This is confirmed as a result of the decrease in the capacity due to the decrease in the Si nanoparticles available per weight as zirconia with a large bulk density was included in the anode material. In addition, the initial efficiency and capacity generally decrease as the carbon layer becomes thicker. In the case of Comparative Examples 1 to 3, as the Si nanoparticles available per weight decreased, the content of pitch, which is a starting material of the carbon matrix, relatively increased within the particles, and the carbon layer became thicker, and accordingly, the initial efficiency and initial discharge capacity decreased.

Meanwhile, since the corresponding zirconia contents of Inventive Examples 1 to 3 were less than 2.5%, it was confirmed that the anode battery exhibited excellent cycle life and high capacity.

## Claims

1. An anode material for a lithium ion battery, the anode material comprising:
Si nanoparticles;
crystalline carbon;
a carbon matrix; and
zirconia in an amount less than 2.5 wt%.

2. The anode material of claim 1, wherein the crystalline carbon includes at least one of artificial graphite, flake graphite, amorphous graphite, graphene, coal-based pitch, and petroleum-based pitch.

3. The anode material of claim 1, wherein the carbon matrix includes carbon derived from at least one of petroleum-based pitch and coal-based pitch having a softening point of 250°C or less, coal tar, PAA, and PVA.

4. The anode material of claim 3, wherein the petroleum-based pitch and the coal-based pitch have a high β-resin value of 25% or more and a fixed carbon ratio of 70% or more.

5. The anode material of claims 1 to 4, wherein the zirconia includes zirconia derived from a process of nanosizing Si particles.

6. The anode material of claims 1 to 4, wherein the anode material includes 40 to 65 wt% of the Si nanoparticles and less than 50 wt% of the crystalline carbon.

7. The anode material of claims 1 to 4, wherein a median particle size of the anode material is 15 µm or less.

8. A method of manufacturing an anode material for a lithium ion battery, the method comprising:
pulverizing a Si raw material through a mechanical milling process to obtain Si nanoparticles;
mixing crystalline carbon and a carbon matrix precursor with the Si nanoparticles to obtain a mixture;
press-molding the mixture to manufacture a block;
heating the block at a temperature less than 1000°C and in an inert atmosphere; and
pulverizing the block,
wherein the anode material includes zirconia in an amount less than 2.5 wt%.

9. The method of claim 8, wherein the mechanical milling process uses a polycrystalline silicon raw material (poly-Si) with a half-width of 0.2 degrees or more as a starting material.

10. The method of claim 8, wherein the mechanical milling is performed using stabilized zirconia balls having a median particle size (D50) of less than twice the D99 particle size of the Si raw material.

11. The method of claim 8, wherein a D1 particle size of the stabilized zirconia is maintained at 52 µm or more during the mechanical milling process.

12. The method of claim 8, wherein a median particle size of the Si nanoparticles is less than 150 nm.

13. The method of claim 8, wherein the crystalline carbon includes at least one of artificial graphite, flake graphite, amorphous graphite, graphene, coal-based pitch, and petroleum-based pitch.

14. The method of claim 8, wherein the carbon matrix precursor is at least one of petroleum-based pitch and coal-based pitch having a softening point of 250°C or less, coal tar, PAA, and PVA.

15. The method of claim 8, wherein the zirconia includes zirconia derived from a mechanical milling process.
